# EUROPÄISCHE PATENTANMELDUNG

(11) **EP 2 116 966 A1**
(43) Veröffentlichungstag der Anmeldung: **11.11.2009**
(21) Anmeldenummer: 09004885.1
(22) Anmeldetag: 02.04.2009
(51) Int. Cl.: G06Q 10/00, G10L 15/00

(54) **System zur sprachgesteuerten, interaktiven Unterstützung bei Wartungsarbeiten oder dergleichen**

(30) Priorität: 05.05.2008 DE 102008022158
(71) Anmelder: Rheinmetall Waffe Munition GmbH, 29345 Unterlüss (DE)
(72) Erfinder: Weisser, Harald, 78052 Villingen-Schwenningen-Marbach (DE)
(74) Vertreter: Dietrich, Barbara

(57) **Zusammenfassung**

Vorgeschlagen wird ein System (100) zur Unterstützung insbesondere bei Wartungs- oder Reparaturarbeiten oder dergleichen an Anlagen (2) und Geräten (8), bestehend aus einer Vorrichtung (3) mit Sprachverarbeitung sowie Sprachausgabe, einem Anwender (5) und wenigstens einem Kommunikationsgerät (6) zwischen dem Anwender (5) und dem Gerät (3) zur sprachgesteuerten, interaktiven Unterstützung, wobei in der elektronischen Vorrichtung (3) eine Dokumentation (1), die Wartungsarbeiten oder dergleichen beinhaltend, in elektronischer Form hinterlegt ist.

## Beschreibung

Geräte und Anlagen mechanischer oder elektrischer Art etc. müssen regelmäßig gewartet, überprüft oder einer Inspektion oder dergleichen unterzogen werden. Dazu werden Wartungs- oder Servicebücher oder -dokumente erstellt und in der Regel als Hardware zur Verfügung gestellt. Aktuell werden entsprechende Unterlagen / Dokumente auch auf einem Rechner /Laptop als Dokumente verfügbar gemacht, so dass sie vor Ort nutzbar sind. Diagnosen werden zwar zwischenzeitlich häufig von einem Rechner oder Laptop auf elektronischem Wege vorgenommen, die Reparatur ist aber auch hierbei noch immer per Hand durchzuführen.

Bekanntlich werden bei Durchführung der Wartungsarbeiten bzw. der Maßnahmen zur Beseitigung von Störungen trotz einer guten Ausbildung und selbst bei großen Erfahrungen entsprechend detaillierte Dokumente vor Ort benötigt. Insbesondere bei der Ausübung der Anweisungen zur Problembehebung muss häufig in diese Dokumente Einblick genommen werden, was jedoch dazu führt, dass die entsprechende Person die Arbeit unterbrechen muss oder dieser zeitweise nur eine Hand zur Verfügung steht.

Mit dieser Thematik befasst sich beispielsweise die DE 100 08 755 A1. In dieser wird ein Verfahren und eine Anordnung zur Instandhaltung und / oder zur Reparatur einer technischen Anlage durch eine für die Anlage nicht spezialisierte Person offenbart, die technische Maßnahmen zur Diagnose und / oder Reparatur an der Anlage durchführen soll. Dazu ist die Person mit einer geeigneten informationstechnologischen (IT-) Infrastruktur versehen, wodurch die Person nicht nur in den Wissenstand eines externen Spezialisten versetzt wird, sondern auch mit diesem kommunizieren und von ihm überwacht werden kann. Dadurch wird die Vor-Ort-Person technisch so aufgerüstet, dass diese Person in Zusammenarbeit mit dem externen Spezialisten alle anfallenden technischen Aufgaben erledigen kann. Zur Ausrüstung zählen dabei u. a. ein Head Set mit Bildeinspiegelung, eine Kamera und ein Audiosystem mit Kopfhörer und Mikrofon. Das Equipment dient dazu, dem Spezialisten das Vor-Ort-Geschehen zu übermittelt, während der Spezialist der Person beispielsweise die Einstellungen von einigen Baugruppen einblendet, die dieser zu überprüfen hat. Des Weiteren werden durch den externen Spezialisten die Messungen etc. geleitet, bis die Fehlersuche erfolgreich abgeschlossen ist. In einer Ausführungsform ist die Datenübertragung von technischen Plänen oder kompletten Service- Handbüchern ganz oder teilweise angedacht, wenn die vorhandene technische Unterlage nicht 100% zur gelieferten Variante passt, wobei über die Bildeinspiegelung dann ein Sol-/ Ist- vergleich durchgeführt wird.

DE 101 16 539 A1 betrifft ein System und ein Verfahren zur automatischen Datenaufbereitung insbesondere im Umfeld Produktion, Montage, Service oder Wartung. Hierbei ist die Dokumentation eines Produktes auf einem zentralen Server abgelegt, sodass sie stetes aktuell ist. Auf diesen Server kann über Web- Techniken entsprechend der eingestellten Profile von berechtigen zugegriffen werden. Dem Abrufenden bzw. Anwender werden dann beispielsweise Teile der Dokumentation über eine Datenbrille in sein Sichtfeld eingeblendet.

Mit der WO 02/41069 A1 werden ein Verfahren zur visuellen Darstellung und eine interaktiven Steuerung von virtuellen Objekten auf einem Ausgabe- Sichtfeld im Rahmen der Kommunikation zwischen Mensch und Maschine offenbart.

Die DE 101 53 511 A1 zeigt ein Service-System mit Multimedia - Dialog zu einem Experten - Center.

Hier stellt sich die Erfindung die Aufgabe, ein weiteres System aufzuzeigen, das einem Nutzer eine verbesserte Anwendung bei Wartungsarbeiten, Störungsermittlungen und Störungsbeseitigen ermöglicht.

Gelöst wird die Aufgabe durch die Merkmale des Patentanspruchs 1. Vorteilhafte Ausgestaltungen sind den Unteransprüchen entnehmbar.

Der Erfindung liegt die Idee Zugrunde, eine bevorzugt vollständige Sprachumsetzung eines Wartungsbuches, eines Serviceheftes, eines Reparaturbuches und dergleichen vorzunehmen und diese Dokumentation in eine elektronische Form zu bringen. Alternativ kann das Darstellen von Konstruktions- und Schaltplänen sowie das Nachlesen des Dokumentes beibehalten und / oder eingebunden werden. Dieses Dokument kann beispielsweise auf einer Disk oder einem anderen Speicherelement, beispielsweise ein USB -Stick, gebracht werden. Dieser Speicher wird insbesondere vor Ort, beispielsweise in der Nähe des Gerätes, welches gewartet werden soll, in eine Vorrichtung mit einer Speicherkapazität, Sprachverarbeitung sowie Sprachausgabe integriert, sodass dem Anwender diese elektronische Dokumentation vor Ort zur Verfügung gestellt wird.

Die elektronische Form ermöglicht dem Anwender, mit der Dokumentation über ein Kommunikationsmittel direkt kommunizieren zu können, beispielsweise mit Hilfe eines Head Sets. Zusätzlich kann dem Anwender eine visuelle Darstellung durch einen transportablen Rechner oder dergleichen mit Display (DE 201 07 967 U1) angeboten werden, der vorzugsweise am Körper des Anwenders befestigbar ist.

Alternativ ist auch eine Kommunikation über moderne Kommunikationsmittel, wie beispielsweise über ein Handy mit Freisprechfunktion (DE 207070966 U1), möglich. In diesem Fall kann der Speicher bzw. die Gegenkommunikationsstelle zentral angesiedelt sein.

Der Anwender gibt insbesondere mittels Spracheingabe der Vorrichtung eine Situation, auf die dieser trifft, vor. Entsprechend dieser Situation wird dem Anwender von dieser elektronischen Vorrichtung die Anweisung zur Arbeitsausführung mitgeteilt. Ein Nachlesen in der Dokumentation ist zu diesem Zeitpunkt nicht nötig.

Handelt es sich um einen technisch versierten und geschulten Anwender kann durch einen Direktbefehl der entsprechende Link zum Dokument gelegt werden, sodass eine Unterstützung beispielsweise bei der Fehlersuche übersprungen werden kann, jedoch die Unterstützung für die Behebung des Fehlers durch den Anwender wieder in Anspruch genommen wird. D.h., mit diesem Direktbefehl werden die im Prozessablauf vorgegebene Schritte übersprungen und der Anwender gelangt direkt an die entsprechende Stelle im der Dokumentation.

Durch Links innerhalb des Dokumentes kann zudem direkt auf die Fehlerquellen hingeführt bzw. auf diese hingewiesen werden. Die vorgefundene Situation kann durch das System direkt bewertet, Störungen können zügig beseitigt und wie die Wartungsarbeiten nicht nur schnell und vollständig erledigt, sondern auch gleich dokumentiert werden. Fehlerprotokolle können auch dazu dienen, Wartungsarbeiten zielgerichtet und in neu definierbaren, anhand der Fehlersequenzen ausgerichteten Intervallen vorzunehmen

Der Vorteil des Systems liegt unter anderem darin, dass dem Anwender beide Hände zur Verfügung stehen, sodass insbesondere in schwer zugänglichen Bereichen am Gerät selbst oder deren Einbauort gewährleistet ist, dass die Wartungsarbeiten oder Störungsbeseitigungen, Inspektionen und Serviceleistungen etc. besser durchführbar sind. Durch Beeinflussung des Prozessablaufs kann er gegebenenfalls den Zeitaufwand der Reparatur oder Wartung bzw. Instandhaltung erheblich reduzieren.

Des Weiteren können Änderungen bzw. Überarbeitungen in eine elektronische Dokumentation einfacher eingearbeitet und mit dem Anwender abgeglichen werden.

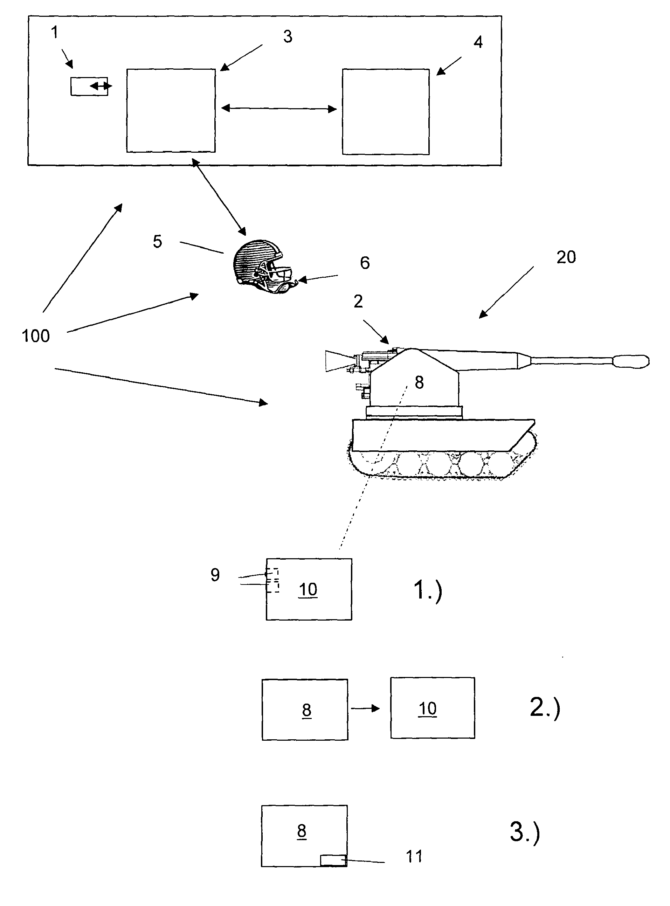

Anhand eines beispielhaften Ausführungsbeispiels soll die Erfindung näher erläutert werden. Es zeigt die einzige Figur ein interaktives, sprachgesteuertes System 100 mit der elektronischen Dokumentation 1 zur Behebung einer Störung vor Ort.

Das elektronische Dokument 1, hier beispielsweise ein in Sprache umgesetztes Servicebuch, dient dabei zur Unterstützung bei der Fehlersuche an einer Anlage 2, beispielsweise einer Waffenstation auf einem Schiff (nicht näher dargestellt) oder einem Fahrzeug 20. Die elektronische Dokumentation 1 ist in einem Rechner, Laptop oder dergleichen elektronischen Vorrichtung 3 mit Sprachverarbeitung und Sprachausgabe, wie sie beispielsweise von Navigationssystemen bekannt sind, eingebunden. Die Anlage 2 ist funktional mit einem Monitor 4 verbunden, eine Verbindung mit der elektronischen Vorrichtung 3 ist nicht notwendig, kann aber vorgesehen werden. Die Dokumentation 1 selbst ist in medialer Form, vorrangig in sprachlicher Form hinterlegt, wobei auch Kombinationen, wie Sprache - nachlesbare (geschriebene) Seiten etc., möglich sind.

Zum System 100 gehörig sind neben einem Anwender 5 zumindest ein Head Set 6 oder anderes Kommunikationsmittel des Anwenders 5 zur Kommunikation mit der elektronischen Vorrichtung 3. Zur visuellen Anzeige der Fehlersuchanweisung oder eines Ausschnittes einer Konstruktionszeichnung bzw. eines Schaltplanes kann des Weiteren ein vorzugsweise am Arm befestigbarer Rechner mit Display genutzt werden (nicht näher dargestellt). Vorrangig wird jedoch eine sprachgesteuerte Anweisung angestrebt.

Beginnend mit einer Fehlermeldung der Waffenstation 2 wird einem Nutzer der Waffenstation diese Fehlermeldung beispielsweise auf dem externen Monitor 4 dargestellt. Entsprechend dieser Fehlermeldung wird eine Reparatur der Waffenstation 2 beauftragt, die beispielsweise vom externen Servicemechaniker oder dem Anwender 5 vor Ort durchgeführt wird. Dabei besteht die Möglichkeit, dass der Rechner 3 bereits das entsprechende Dokument 1 geöffnet hat und auf die Bereitschaft des Anwenders 5 wartet oder das der Anwender 5 die Kommunikation seinerseits beginnt und dem Rechner 3 die Systemfehlermeldung XY mitteilt (beispielsweise: Fehlermeldung- Geschütz, Nachführanlage - defekt). Der Rechner 3 weist den Anwender 5 dann beispielsweise als ersten Schritt das Ausschalten des betroffenen Gerätes 8 der Waffenstation 2 sowie die Überprüfung der entsprechenden Sicherungen 9 an. Wird nun seitens des Anwenders 5 die Funktionsfähigkeit der Sicherungen 9 signalisiert durch Spracheingabe "Sicherungen o. K.", wird der Anwender 5 aufgefordert, als nächstes die Frontplatte 10 des Gerätes 8 zu öffnen und beispielsweise den Stecker 11 zu überprüfen. Wird durch den Anwender 5 beispielsweise erkannt, dass der Stecker 11 korrodiert ist und teilt er dieses mit. In Reaktion erfolgt dann beispielsweise in der Arbeitsanweisung das Tauschen des Steckers 11.

Ist der Stecker 11 jedoch nicht defekt, wird das Prozedere so lange vollzogen, bis der Fehler behoben und dem Anwender 5 entweder eine entsprechende Mitteilung übermittelt wird oder der Anwender 5 dies selbst feststellt, wobei die Fehlermeldung dann beispielsweise vom Monitor 4 verschwindet oder diese als behoben angibt / anzeigt.

Es können sogenannte Links im Dokument 1 gesetzt werden, sodass durch einen Direktbefehl des Anwenders 5 der entsprechende Link zum Dokument 1 gelegt werden kann, wenn der Anwender sich über den Fehler selbst annähernd sicher ist oder zumindest die Fehlerquelle kennt, sodass eine Unterstützung beispielsweise bei der Fehlersuche übersprungen, jedoch die Unterstützung für die Behebung des Fehlers durch den Anwender wieder in Anspruch genommen werden kann (nicht aber muss). Dies hat den Vorteil, dass das Dokument 1 und damit die Fehlersuche nicht von vorne beginnend durchgeführt werden muss.

Es versteht sich, dass auch Fehlerdokumentationen durchgeführt werden können. Durch Setzten entsprechender Links innerhalb des Dokuments 1 können somit häufigen Fehlern die entsprechenden Fehlerquellen als vorrangige Suchbereiche zugewiesen werden. Dem Anwender 5 werden die häufigen Fehlerquellen gemeldet, die im Zusammenhang mit dem Fehler bekannt sind. Das kann insbesondere Reparaturzeiten reduzieren.

Zudem können häufige Fehlerquellen beim Hersteller ausgewertet und beispielsweise bei Neukonstruktionen ähnlicher Anlagen 2 und Geräte 8 berücksichtigt werden. Auch Konstruktionsangleichungen bereits vorhandener Anlagen 2 und Geräte 8 sind denkbar.

## Patentansprüche

1. System (100) zur Unterstützung insbesondere bei Wartungs- oder Reparaturarbeiten oder dergleichen an Anlagen (2) und Geräten (8), bestehend aus einer elektronischen Vorrichtung (3) mit Sprachverarbeitung sowie Sprachausgabe, einem Anwender (5) und wenigstens einem Kommunikationsgerät (6) zwischen dem Anwender (5) und der Vorrichtung (3) zur sprachgesteuerten, interaktiven Unterstützung, wobei in der elektronischen Vorrichtung (3) eine Dokumentation (1), die Wartungsarbeiten oder dergleichen beinhaltend, in medialer Form hinterlegt ist, die sprachlich als auch in Kombinationen, wie Sprache und nachlesbare Seiten etc. aufgearbeitet ist.

2. System nach Anspruch 1, **dadurch gekennzeichnet, dass** ein beispielsweise am Arm des Anwenders (5) tragbarer Rechner (7) mit Display eingebunden ist für eine mögliche visuellen Anzeige der Fehlersuchanweisung oder eines Ausschnittes eines Konstruktionszeichnung bzw. eines Schaltplanes.

3. Verfahren zur Unterstützung insbesondere bei Wartung- oder Reparaturarbeiten oder dergleichen an Anlagen (2) und Geräten (9), wobei ein Anwender (5) mit einer, eine elektronisch hinterlegte Dokumentation (1) die Wartungs- oder Reparaturarbeiten oder dergleichen enthaltenden Anweisungen betreffend, elektronischen Vorrichtung (3) kommuniziert, sodass eine sprachgesteuerte, interaktive Unterstützung durch die elektronische Vorrichtung (3) stattfindet.

4. Verfahren nach Anspruch 3, **dadurch gekennzeichnet, dass** der Anwender (5) die Situation angibt und entsprechend dieser die Anweisung zur Arbeitsausführung erhält.

5. Verfahren nach Anspruch 3 oder 4, **dadurch gekennzeichnet, dass** eine Fehlerdokumentationen durchgeführt werden kann, wobei durch Setzten entsprechender Links innerhalb des Dokuments (1) häufigen Fehlern die entsprechenden Fehlerquellen als vorrangige Suchbereiche zugewiesen werden kann.

6. Verfahren nach einem der Ansprüche 3 bis 5, **dadurch gekennzeichnet, dass** durch einen Direktbefehl des Anwenders (5) ein entsprechender Link zur entsprechenden Stelle im Dokument (1) gelegt werden kann, sodass eine Unterstützung beispielsweise bei der Fehlersuche übersprungen werden kann.
